# EUROPÄISCHE PATENTSCHRIFT

(11) **EP 1 074 158 B1**
(45) Veröffentlichungstag und Bekanntmachung des Hinweises auf die Patenterteilung: **10.09.2008**
(21) Anmeldenummer: 99916808.1
(22) Anmeldetag: 19.03.1999
(51) Int. Cl.: H04Q 7/32, H04M 1/66

(54) **FUNKGERÄT MIT ERWEITERTEN NUTZERAUTHENTFIZIERUNGSMÖGLICHKEITEN**
RADIO EQUIPMENT WITH ENHANCED USER AUTHENTICATION POSSIBILITIES
APPAREIL RADIO A POSSIBILITES ETENDUES D'AUTHENTIFICATION DE L'UTILISATEUR

(30) Priorität: 23.04.1998 DE 19818324
(43) Veröffentlichungstag der Anmeldung: 07.02.2001
(73) Patentinhaber: Siemens Home and Office Communication Devices GmbH & Co. KG, 81379 München (DE)
(72) Erfinder: RAAF, Bernhard, D-81475 München (DE); BROMBA, Manfred, D-81379 München (DE)
(74) Vertreter: Maier, Daniel Oliver
(86) Internationale Anmeldenummer: PCT/DE1999/000792
(87) Internationale Veröffentlichungsnummer: WO 1999/056482

(56) Entgegenhaltungen:
- WO-A-98/11750
- DE-U- 9 304 488
- GB-A- 2 148 569
- GB-A- 2 315 954
- Lapere M, Johnson E: "User Authentification in Mobile Telecommunication Environments using Voice Biometrics and Smartcards" Proceedings of: Technology for Cooperative Competition. 4th International Conference on Intelligence in Services and Networks, IS&N '97. Cernobbio, Italy, 27-29 May 1997 XP002110176

## Beschreibung

Der Zugriff auf moderne Funkgeräte, insbesondere Mobilfunkendgeräte, die gemäß dem GSM- (Global System for Mobile Communication) Standard funktionieren bzw. deren Benutztung innerhalb eines Mobilfunksystems sind durch eine Geheimzahl, eine sogenannte Personal Identification Number, PIN geschützt. Hierzu gehört auch der Schutz des Zugangs zu bestimmten Daten oder Diensten, auch wenn diese nicht durch das Funkgerät, sondern durch andere Geräte in einem Computer-oder Kommunikationsnetz zur Verfügung gestellt werden.

Die heute wohl häufigste Art der Eingabe einer Authentifizierungsinformation ist die Eingabe über eine Tastatur des Gerätes. Nach der Eingabe wird die Richtigkeit der eingegebenen Information und damit die Berechtigung des eingebenden Benutzers durch eine Prüfeinrichtung im Gerät oder in einem Computer- oder Kommunikatinsnetz geprüft. Bei Mobilfunkendgeräten nach dem GSM-Standard geschieht dies, indem eine Datenverarbeitungseinrichtung auf dem Benutzerauthentifizierungsmodul, der sogenannten SIM-Card des Funkgerätes prüft, ob die eingegebene PIN zu der auf der SIM-Card gespeicherten Information paßt. Ist dies der Fall, gibt die SIM-Card das Mobilfunkendgerät zur Benutzung frei. Es erhöht dabei die Sicherheit des Benutzers, daß nach dem GSM-Standard die PIN nicht im Funkgerät gespeichert werden darf, sondern nur in unzugänglicher Form auf der SIM-Card gespeichert sein darf.

Seit einiger Zeit sind Technologien verfügbar, die andere Formen der Authentifizierung eines Benutzers erlauben. Diese Technologien beruhen auf der Erfassung benutzerspezifischer biometrischer Merkmale durch spezielle Sensoren. Ein wichtiges Beispiel hierfür sind Sensoren zur Erkennung des Fingerabdruckes. Andere biometrische Merkmale wie z.B. die Netzhauttextur des menschlichen Auges oder die Charakteristik einer menschlichen Stimme werden ebenfalls schon in einigen Geräten eingesetzt.

Üblicherweise werden die von den Sensoren erfaßten Merkmale in einer Datenverarbeitungseinrichtung des Gerätes oder eines Kommunikationsnetzes mit den bekannten Merkmalen eines berechtigten Benutzers verglichen, und bei hinreichender Übereinstimmung wird der Zugang zu dem gewünschten Dienst, den benötigten Daten oder der gewählten Gerätefunktion freigeschaltet - siehe hierzu auch GB-A-2 315 954.

Bei einigen Gerätetypen erscheint es sinnvoll, die beiden genannten Arten der Authentifizierung miteinander zu kombinieren. Zum Beispiel bei Mobilfunkendgeräten ist es sicher wünschenswert, daß diese nicht nur von ihrem Besitzer mittels Fingerabdrucksensor benutzt werden können, sondern daß auch andere Personen, denen die PIN mitgeteilt wurde oder die das Gerät mit ihrem eigenen Benutzerauthentifizierungsmodul, der SIM-Card nutzen möchten, zu einer Benutzung im Rahmen der ihnen zustehenden Berechtigung in der Lage sind. Außerdem könnte die Authentifizierung mittels Fingerabdruck gelegentlich fehlschlagen oder undurchführbar sein, z.B. weil die Hände des Benutzers verschmutzt sind oder der Benutzer Handschuhe trägt. Aus diesen oder ähnlichen Gründen ist es wünschenswert oder notwendig, daß ein oder mehrere Benutzer eines Gerätes sich an diesem über unterschiedliche Wege authentifizieren können. Die biometrische Authentifizierung soll in diesen Fällen neben der Authentifizierung durch PIN-Eingabe möglich sein. Bei Mobilfunkendgeräten nach dem GSM-Standard kommt hinzu, daß der Standard die Möglichkeit der Authentifizierung durch PIN-Eingabe zwingend vorschreibt.

Aus der geschilderten Situation ergibt sich, daß eine Verwendung herkömmlicher biometrischer Authentifizierungsverfahren bei Mobilfunkendgeräten nach dem GSM-Standard nicht möglich ist, weil diese schon aus Gründen der Kompatibilität zum GSM-Standard die Authentifizierung über die PIN mit der SIM-Card zwingend erfordern. Die zunächst sich scheinbar anbietende Möglichkeit, die PIN im Gerät zu speichern und bei erfolgreicher Prüfung der Übereinstimmung des erfaßten Fingerabdrucks mit dem gespeicherten Fingerabdruck eines berechtigten Benutzers diese gespeicherte PIN an die SIM-Card zur Prüfung zu übergeben, scheidet aus, weil eine Speicherung der PIN im Mobilfunkendgerät an anderer Stelle als innerhalb der SIM-Card nach dem GSM-Standard aus Sicherheitsgründen verboten ist. Die biometrische Authentifizierung käme in diesen Fällen also nur als zusätzliche Sicherung in Betracht. Eine solche zusätzliche Sicherung ist aber angesichts der hohen Sicherheit der Authentifizierung der PIN-Eingabe nicht erforderlich und würde wohl auch von vielen Benutzern nicht akzeptiert.

Der Erfindung liegt daher die Aufgabe zugrunde, eine technische Lehre anzugeben, welche eine für den Benutzer komfortable Kombination einer biometrischen Benutzerauthentifizierung mit einer Authentifizierung durch eine Geheimzahl-Eingabe auch im Falle von Mobilfunkendgeräten nach dem GSM-Standard oder in ähnlich gelagerten Fällen erlaubt.

Diese Aufgabe wird durch ein Funkgerät mit Merkmalen nach Anspruch 1 gelöst. Weiterbildungen ergeben sich aus den Unteransprüchen.

Die Erfindung beruht also auf dem Gedanken, daß das Funkgerät optional in einen von zwei unterschiedlichen ausgeschalteten Gerätezuständen versetzt werden kann:
- In dem ersten ausgeschalteten Gerätezustand ist das Benutzerauthentifizierungsmodul nicht mit Strom versorgt. Dadurch ist vor einem Wechsel in einen eingeschalteten Zustand bzw. vor einer Kommunikation über das Funkgerät zwangsläufig der Vergleich einer auf dem Benutzerauthentifizierungsmodul abgespeicherten Geheimzahl mit einer eingegebenen Geheimzahl durchzuführen.
- Im zweiten ausgeschalteten Gerätezustand ist das Benutzerauthentifizierungsmodul schon mit Strom versorgt. Dadurch ist vor einer Kommunikation über das Funkgerät der Vergleich von eingegebener und abgespeicherter Geheimzahl nicht zwingend notwendig. Somit kann für einen Wechsel von dem zweiten ausgeschalteten Gerätezustand in einen eingeschalteten Gerätezustand, in dem eine Kommunikation über das Funkgerät möglich ist, eine Benutzerauthentifizierung, die auf einem biometrischen Verfahren basiert, vorausgesetzt werden.

Die Erfindung wird im folgenden anhand einer Figur, die eine schematische Darstellung eines Funkgerätes darstellt, näher beschrieben.

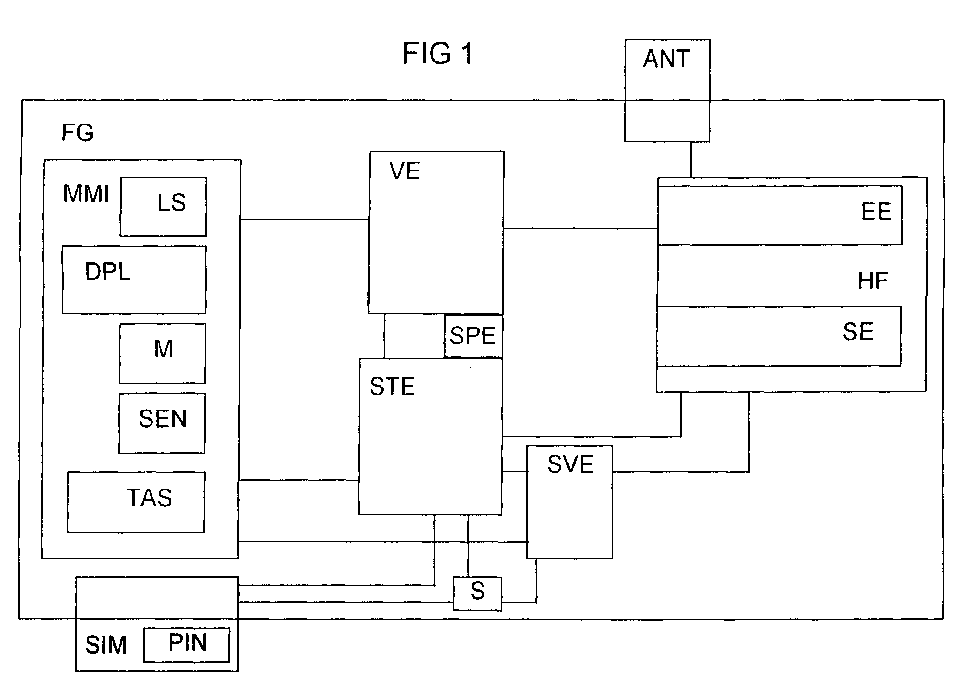

Die Figur zeigt ein Funkgerät FG, bestehend aus einer Bedieneinheit MMI, einer Steuereinrichtung STE und einer Verarbeitungseinrichtung VE, einer Stromversorgungseinrichtung SVE, einem Benutzerauthentifizierungsmodul SIM, einem Hochfrequenzteil HF bestehend aus einer Empfangseinrichtung EE, einer Sendeeinrichtung SE und einem Frequenzsynthesizer SYN und einer Antenneneinrichtung ANT. Die einzelnen Elemente des Funkgerätes FG sind auch durch Leiterbahnen, Drähte, Kabel oder Bussysteme miteinander verbunden.

Die Bedieneinheit MMI besteht aus einem Lautsprecherelement LS zur Wiedergabe von Audiosignalen und einem Mikrophonelement M zur Aufnahme von Audiosignale. Außerdem ist die Bedieneinheit MMI mit einer Tastatur TAS zur Eingabe von Ziffern und Buchstaben und zur Auswahl von Menüpunkten versehen. Über ein Display DPL können Menüpunkte, Ziffern oder andere für den Kommunikationsablauf relevante Informationen dargestellt werden. Außerdem sind Sensormittel SEN zur Erkennung biometrischer Merkmale, wie beispielsweise vonFingerabdrücken vorgesehen.

Die Steuereinrichtung STE besteht im wesentlichen aus einem programmgesteuerten Mikrocontroler und die Verarbeitungseinrichtung VE aus einem digitalen Signalprozessor, wobei beide schreibend und lesend auf Speicherbausteine SPE zugreifen können. Der Mikrocontroler steuert und kontrolliert alle wesentlichen Elemente und Funktionen des Funkgerätes FG und steuert im wesentlichen den Kommunikations- und Signalisierungsablauf. Auch die Versetzung des Funkgerätes in definierte Gerätezustände und das Ein- und Ausschalten bestimmter Hardware-Elemente des Funkgerätes bzw. deren Stromversorgung mittels geeigneter Schalteinrichtungen S wird durch die Steuereinrichtung STE gesteuert.

In den flüchtigen oder nicht-flüchtigen Speicherbausteinen SPE sind die Programmdaten, die zur Steuerung des Funkgerätes FG und des Kommunikationsablaufs, insbesondere auch der Signalisierungsprozeduren benötigt werden, Geräteinformationen vom Nutzer eingegebene Informationen, während der Verarbeitung von Signalen entstehende Informationen und Referenzdaten biometrischer Merkmale von berechtigten Benutzern abgespeichert.

Mittels der Stromversorgungseinrichtung SVE, die mit Akkus versehen sein kann, werden die wesentlichen Elemente des Funkgerätes und das Benutzerauthentifizierungsmodul SIM mit Strom versorgt.

Der Hochfrequenzteil HF besteht aus einer Sendeeinrichtung SE, mit einem Modulator und einem Verstärker und einer Empfangseinrichtung EE mit einem Demodulator und ebenfalls einem Verstärker. Der Sendeeinrichtung SE und der Empfangseinrichtung EE wird über den Synthesizer SYN die Frequenz eines spannungsgeregelten Oszillators zugeführt.

Zum Empfang und zum Senden von Nutz- und/oder Signalisierungsinformationen über die Luftschnittstelle eines Mobilfunksystems ist eine Antenneneinrichtung ANT vorgesehen.

Außerdem verfügt das Funkgerät über einen Einsteckschacht und ein darin einsteckbares Benutzerauthentifizierungsmodul SIM, auf dem teilnehmer- und netzspezifische Informationen, wie eine Geheimzahl PIN und zur Authentifizierung durch das Mobilfunksystem nötige Informationen abgespeichert sind bzw. berechnet werden. Die Stromversorgung des Benutzerauthentifizierungsmodul SIM, das durch eine Chipkarte realisiert sein kann, wird durch eine von der Steuereinrichtung STE angesteuerte Schalteinrichtung S ein- bzw. ausgeschaltet.

Zunächst befindet sich das Funkgerät FG in einem ersten ausgeschalteten Gerätezustand, in dem wesentliche Elemente des Funkgerätes FG zumindest aber das Hochfrequenzteil HF und das Benutzerauthentifizierungsmodul SIM nicht mit Strom versorgt sind.

Um den ersten ausgeschalteten Gerätezustand zu verlassen, betätigt der Benutzer eine Einschalttaste, worauf zumindest die Steuereinrichtung STE und die Bedieneinheit MMI mit Strom versorgt werden, und der Benutzer mittels einer geeigneten Dispalyanzeige zur Eingabe der Geheimzahl PIN aufgefordert wird. Nach der Eingabe der richtigen Geheimzahl PIN, die durch einen Vergleich der auf dem Benutzerauthentifizierungsmodul SIM abgespeicherten Geheimzahl PIN verifiziert wird, wird die mobilfunksytemspezifische Authentifizierungsprozedur ausgelöst und durchgeführt. Zu diesem Zweck werden auch Kennungen auf dem Benutzerauthentifizierungsmodul SIM berechnet, über die Luftschnittstelle mit dem Mobilfunksystem ausgetauscht, mit in Datenbanken bzw. Authentifizierungszentren abgelegten Kennungen verglichen und schließlich das Funkgerät FG in das Mobilfunksystem eingebucht.

Nun wird das Gerät gemäß einer abgespeicherten Voreinstellung automatisch oder nach einer entsprechenden Tastenbetätigung durch den Benutzer:
- entweder in einen eingeschalteten bzw. kommunikationsbereiten Zustand versetzt, in dem das Gerät beispielsweise empfangsbereit ist oder in dem Verbindungen zu anderen Teilnehmern über das Mobilfunksystem aufgebaut werden können,
- oder in den zweiten ausgeschalteten Gerätezustand versetzt, in dem im wesentlichen nur noch das Benutzerauthentifizierungsmodul SIM mit Strom versorgt wird,
- oder ein zweites Benutzerauthentifizierungsverfahren durchgeführt, das auf einem biometrischen Verfahren beruht.

Die Durchführung des auf dem biometrischen Verfahren beruhenden Authentifizierungsverfahrens kann auch in dem zweiten ausgeschalteten Gerätezustand durch die Betätigung einer entsprechenden Taste ausgelöst werden.

Nach der automatischen bzw. durch den Benutzer geforderten Auslösung des biometrischen Authentifizierungsverfahrens werden zunächst zumindest die Bedieneinheit MMI, die Verarbeitungseinrichtung VE, die Steuereinrichtung STE und weiterhin das Benutzerauthentifizierungsmodul SIM mit Strom versorgt. Dann wird das biometrische Authentifizierungsverfahren durchgeführt, das im folgenden anahand einer Fingerabdruckerkennung exemplarisch beschrieben wird.

Ein Fingeradrucksensor SEN erfaßt das Linienmuster der Fingerkuppe, indem die Sensorzellen die Änderungen des elektrischen Feldes, das die erhobenen Linien und die Vertiefungen auf der Fingeroberfläche hervorrufen, aufnehmen, und daraus sein elektrisches Abbild erzeugen. Die Erfassung kann dabei auf einem kapazitiven Meßprinzip beruhen, bei dem jedes Pixel einen Kondensator darstellt und die Haut des aufgelgeten Fingers als dritte Kondensatorplatte wirkt. Die sich durch die Erhöhungen und Vertiefungen der Rillenmuster in den einzelnen Sensorelementen ergebenden Rückkoppelungskapazitäten ergeben analoge Werte, die eine dreidimensionale Aufnahme des Abdrucks liefern. Da überdies die Leitfähigkeit der Haut das Signal beeinflußt, ist der Sensor auch mit einer Wachsattrappe nicht zu täuschen. Nach einer Analog/Digitalwandlung dieser analogen Werten werden die entsprechenden digitalen Signale an die Verarbeitunaseinrichtung VE, insbesondere einen digitalen Signalprozessor übermittelt. Im digitalen Signalprozessor werden durch geeignete Bildverarbeitungsalgorithmen aus den Fingerabdruckswerten unverwechselbare Merkmale errechnet und mit den entsprechenden unverwechselbaren Merkmalen, die in den Speicherbausteinen SPE des Funkgerätes FG oder auf dem Benutzerauthentifizierungsmodul SIM als Referenzdaten berechtigter Benutzer abgespeichert sind, verglichen. Im Falle der Übereinstimmung der ermittelten und der abgespeicherten Merkmale wird ein Freigabesignal an die Steuereinrichtung STE übermittelt bzw. bei signifikanten Unterschieden zwischen den ermittelten und den abgespeicherten Informationen kein Freigabesignal an die Steuereinrichtung STE übermittelt.

Nachdem auch das zweite Benutzerauthentifizierungsverfahren erfolgreich durchgeführt wurde, wird das Funkgerät FG in einen eingeschalteten bzw. kommunikationsbereiten Zustand versetzt, in dem auch das Hochfrequenzteil zumindest zeitweise mit Strom versorgt wird.

Um das Gerät wieder von dem eingeschalteten Gerätezustand in einen ausgeschalteten Gerätezustand zu versetzen, gibt es zwei Möglichkeiten, die optional automatisch gemäß einer Voreinstellung oder durch den Benutzer über die Bedieneinrichtung MMI ausgewählt werden können:
- das Funkgerät FG wird in den ersten ausgeschalteten Gerätezustand versetzt, in dem weder wesentliche Elemente des Funkgerätes FG, noch das Benutzerauthentifizierungsmodul SIM mit Strom versorgt werden;
- das Funkgerät FG wird in den zweiten ausgeschalteten Gerätezustand versetzt, in dem wesentliche Elemente des Funkgerätes FG, zumindest das Hochfrequenzteil nicht mit Strom versorgt werden, jedoch das Benutzerauthentifizierungsmodul SIM weiterhin kontinuierlich mit Strom versorgt wird.

Um von dem zweiten ausgeschalteten Gerätezustand in einen eingeschalteten Gerätezustand zu gelangen, ist nun die Eingabe einer Geheimzahl nicht erforderlich, sondern reicht es aus, das biometrische Authentifizierungsverfahren erfolgreich durchzuführen.

Bei einer Ausgestaltung der Erfindung ist vorgesehen, daß zumindest im Falle eines Akkuwechsels oder im Falle eines durch eine andere Ursache begründeten Ausfalls der Stromversorgungseinrichtung SVE zumindest das Benutzerauthentifizierungsmodul SIM durch einen parallel zur Stromversorungseinrichtung SVE geschalteten Pufferkondensator weiter mit Strom versorgt wird.

Eine andere Weiterbildung der Erfindung sieht vor, daß auch vor der Ausführung bestimmter Funktionen, wie beispielsweise der Einleitung von Signalisierungsprozeduren oder dem Zugriff auf das Telefonbuch usw. die erfolgreiche Durchführung des biometrischen Authentifizierungsverfahrens nötig ist.

## Patentansprüche

1. Funkgerät (FG) , mit
a) Mitteln zum Senden und Empfangen (SE,EE) von Signalisierungs- und/oder Nutzinformationen,
b) Steuermitteln (STE) zur Versetzung des Funkgerätes (FG) in unterschiedliche Gerätezustände
c) einer Bedieneinrichtung (MMI) zur Auslösung von Gerätezusandswechseln,
d) einem Benutzerauthentifizierungsmodul (SIM),
e) Mitteln (MMI, STE) zur Durchführung einer ersten Benutzerauthentifizierung, die auf der Eingabe einer Geheimzahl basiert,
f) Mitteln (MMI,SEN,STE) zur Durchführung einer zweiten Benutzerauthentifizierung, die auf einem biometrischen Verfahren basiert,
g) Mitteln (MMI, STE) zum wahlweisen Aussschalten des Funkgerätes in
- einen ersten ausgeschalteten Gerätezustand, in dem wesentliche Elemente (VE,STE,HF) des Funkgerätes (FG) und das Benutzerauthentifizierungsmodul (SIM) nicht mit Strom versorgt sind, oder
- einen zweiten ausgeschalteten Gerätezustand, in dem wesentliche Elemente (VE,STE,HF) des Funkgerätes (FG) nicht mit Strom versorgt sind, und das Benutzerauthentifizierungsmodul (SIM) mit Strom versorgt ist.

2. Funkgerät (FG) nach Anspruch 1, bei dem
a) im ersten ausgeschalteten Gerätezustand die Durchführung einer Benutzerauthentifizierung, die auf einem biometrischen Verwahren basiert, nicht möglich ist,
b) im zweiten ausgeschalteten Gerätezustand die Durchführung einer Benutzerauthentifizierung, die auf einem biometrischen Verfahren basiert, möglich ist.

3. Funkgerät (FG) nach einem der vorhergehenden Ansprüche, bei dem
für einen Zustandswechsel vom zweiten ausgeschalteten Gerätezustand in einen eingeschalteten Gerätezustand eine Benutzerauthentifizierung, die auf einem biometrischen Verfahren basiert, durchzuführen ist.

4. Funkgerät (FG) nach einem der vorhergehenden Ansprüche, bei dem
für einen Zustandswechsel vom ersten ausgeschalteten Gerätezustand in den zweiten ausgeschalteten Gerätezustand bzw. einen eingeschalteten Gerätezustand zumindest eine Benutzerauthentifizierung, die auf der Eingabe einer Geheimzahl basiert, durchzuführen ist.

5. Funkgerät (FG) nach einem der vorhergehenden Ansprüche, bei dem
die Wahl des auf den ersten ausgeschalteten Gerätezustand folgenden Gerätezustandes automatisch gemäß einer Voreinstellung erfolgt.

6. Funkgerät (FG) nach einem der vorhergehenden Ansprüche, bei dem
die Wahl des auf den ersten ausgeschalteten Gerätezustand folgenden Gerätezustandes durch den Benutzer über eine Bedieneinrichtung (MMI) erfolgt.

7. Funkgerät (FG) nach einem der vorhergehenden Ansprüche, bei dem
die Wahl eines auf einen eingeschalteten Gerätezustand folgenden ausgeschalteten Gerätezustandes automatisch gemäß einer Voreinstellung erfolgt.

8. Funkgerät (FG) nach einem der vorhergehenden Ansprüche, bei dem
die Wahl eines auf einen eingeschalteten Gerätezustand folgenden ausgeschalteten Gerätezustandes durch den Benutzer über eine Bedieneinrichtung (MMI) erfolgt.

9. Funkgerät (FG) nach einem der vorhergehenden Ansprüche, bei dem
im zweiten ausgeschalteten Gerätezustand das Benutzerauthentifizierungsmodul (SIM) auch durch einen Pufferkondensator mit Strom versorgbar ist.

10. Funkgerät (FG) nach einem der vorhergehenden Ansprüche, das auch in einen Grundmodus versetzbar ist, in dem nur der erste ausgeschaltete Gerätezustand existiert, und die Benutzerauthentifizierung auf der Eingabe einer Geheimzahl basiert.

## Claims

1. Transceiver (FG), comprising
a) means for transmitting and receiving (SE, EE) signalling and/or user information,
b) control means (STE) for placing the transceiver (FG) in different states of the device,
c) an operating facility (MMI) for triggering changes in the state of the device,
d) a user authentication module (SIM),
e) means (MMI, STE) for performing a first user authentication process which is based on inputting a secret number,
f) means (MMI, SEN, STE) for performing a second user authentication process which is based on a biometric method,
g) means (MMI, STE) for optionally switching the transceiver off to
- a first off-state of the device in which major elements (VE, STE, HF) of the transceiver (FG) and the user authentication module (SIM) are not supplied with power, or
- a second off-state of the device in which major elements (VE, STE, HF) of the transceiver (FG) are not supplied with power and the user authentication module (SIM) is supplied with power.

2. Transceiver (FG) according to Claim 1, in which
a) in the first off-state of the device, a user authentication process based on a biometric method cannot be performed,
b) in the second off-state of the device, a user authentication process based on a biometric method can be performed.

3. Transceiver (FG) according to one of the preceding Claims, in which a user authentication process based on a biometric method can be performed for a change of state from the second off-state of the device to an on-state of the device.

4. Transceiver (FG) according to one of the preceding Claims, in which at least one user authentication process based on the input of a secret number can be performed for a change of state from the first off-state of the device to the second off-state of the device or to an on-state of the device.

5. Transceiver (FG) according to one of the preceding Claims, in which the state of the device following the first off-state of the device is selected automatically in accordance with a preset.

6. Transceiver (FG) according to one of the preceding Claims, in which the state of the device following the first off-state of the device is selected by the user via an operating facility (MMI).

7. Transceiver (FG) according to one of the preceding Claims, in which an off-state of the device following an on-state of the device is selected automatically in accordance with a preset.

8. Transceiver (FG) according to one of the preceding Claims, in which
an off-state of the device following an on-state of the device is selected by the user via an operating facility (MMI).

9. Transceiver (FG) according to one of the preceding Claims, in which, in the second off-state of the device, the user authentication module (SIM) can also be supplied with power by a buffer capacitor.

10. Transceiver (FG) according to one of the preceding Claims, which can also be placed in a basic mode in which only the first off-state of the device exists, and the user authentication is based on the input of a secret number.

## Revendications

1. Appareil radio (FG), comprenant
a) des moyens destinés à émettre et recevoir (SE, EE) des informations de signalisation et/ou des informations utiles,
b) des moyens de commande (STE) destinés à mettre l'appareil radio (FG) dans différents états d'appareil,
c) un dispositif de commande (MMI) destiné à déclencher des changements d'état d'appareil,
d) un module d'authentification de l'utilisateur (SIM),
e) des moyens (MMI, STE) destinés à la réalisation d'une première authentification de l'utilisateur basée sur l'entrée d'un numéro confidentiel,
f) des moyens (MMI, SEN, STE) destinés à la réalisation d'une seconde authentification de l'utilisateur basée sur un procédé biométrique,
g) des moyens (MMI, STE) destinés à éteindre l'appareil radio au choix dans
- un premier état d'appareil éteint, dans lequel des éléments essentiels (VE, STE, HF) de l'appareil radio (FG) et le module d'authentification de l'utilisateur (SIM) ne sont pas alimentés en courant, ou
- un second état d'appareil éteint, dans lequel des éléments essentiels (VE, STE, HF) de l'appareil radio (FG) ne sont pas alimentés en courant et le module d'authentification de l'utilisateur (SIM) est alimenté en courant.

2. Appareil radio (FG) selon la revendication 1, dans lequel
a) dans le premier état d'appareil éteint, la réalisation d'une authentification de l'utilisateur basée sur un procédé biométrique n'est pas possible,
b) dans le second état d'appareil éteint, la réalisation d'une authentification de l'utilisateur basée sur un procédé biométrique est possible.

3. Appareil radio (FG) selon l'une quelconque des revendications précédentes, dans lequel,
pour un changement d'état du second état d'appareil éteint à un état d'appareil allumé, une authentification de l'utilisateur basée sur un procédé biométrique doit être réalisée.

4. Appareil radio (FG) selon l'une quelconque des revendications précédentes, dans lequel,
pour un changement d'état du premier état d'appareil éteint au second état d'appareil éteint resp. à un état d'appareil allumé, au moins une authentification de l'utilisateur basée sur l'entrée d'un nombre confidentiel doit être réalisée.

5. Appareil radio (FG) selon l'une quelconque des revendications précédentes, dans lequel
la sélection de l'état d'appareil succédant au premier état d'appareil éteint est réalisée automatiquement selon un préréglage.

6. Appareil radio (FG) selon l'une quelconque des revendications précédentes, dans lequel
la sélection de l'état d'appareil succédant au premier état d'appareil éteint est réalisée par l'utilisateur par l'intermédiaire d'un dispositif de commande (MMI).

7. Appareil radio (FG) selon l'une quelconque des revendications précédentes, dans lequel
la sélection d'un état d'appareil éteint succédant à un état d'appareil allumé est réalisée automatiquement selon un préréglage.

8. Appareil radio (FG) selon l'une quelconque des revendications précédentes, dans lequel
la sélection d'un état d'appareil éteint succédant à un état d'appareil allumé est réalisée par l'utilisateur par l'intermédiaire d'un dispositif de commande (MMI).

9. Appareil radio (FG) selon l'une quelconque des revendications précédentes, dans lequel
dans le second état d'appareil éteint, le module d'authentification de l'utilisateur (SIM) peut être alimenté en courant par un condensateur tampon.

10. Appareil radio (FG) selon l'une quelconque des revendications précédentes, qui peut être également mis dans un mode de base, dans lequel seulement le premier état d'appareil éteint existe et dans lequel l'authentification de l'utilisateur est basée sur l'entrée d'un numéro confidentiel.
